# EUROPÄISCHE PATENTANMELDUNG

(11) **EP 2 361 789 A1**
(43) Veröffentlichungstag der Anmeldung: **31.08.2011**
(21) Anmeldenummer: 11153083.8
(22) Anmeldetag: 02.02.2011
(51) Int. Cl.: B60B 39/04

(54) **Sandstreuvorrichtung für Fahrzeuge sowie Systemkomponenten für solche Sandstreuvorrichtungen**

(30) Priorität: 18.02.2010 DE 102010000453
(71) Anmelder: IBEG systems GmbH, 45770 Marl (DE)
(72) Erfinder: Pietrowski, Peter, 45657, Recklinghausen (DE)
(74) Vertreter: CBDL Patentanwälte

(57) **Zusammenfassung**

Die Erfindung betrifft eine Sandstreuvorrichtung für Fahrzeuge sowie bestimmte Teile einer solchen Sandstreuvorrichtung, wobei die Vorrichtung wenigstens einen Sandbehälter (2) und einen Sandauslauf (5) mit einer Sandleitung zum Transportieren von Sand aus dem Sandbehälter zu einer Sandstreustelle umfaßt.

Um das Nachfüllen von Sand insbesondere bei offenen Systemen einfacher, sauberer und kostengünstiger zu gestalten, ist bei einer erfindungsgemäßen Sandstreuvorrichtung der Sandbehälter als Wechselbehälter (2) ausgebildet ist und eine Behälteraufnahme (1) zum austauschbaren Haltern des Sandbehälters vorgesehen.

## Beschreibung

### TECHNISCHES GEBIET DER ERFINDUNG

Die Erfindung betrifft eine Sandstreuvorrichtung für Fahrzeuge sowie verschiedene Systemkomponenten für solche Sandstreuvorrichtungen.

### HINTERGRUND DER ERFINDUNG

Sandstreuvorrichtungen der hier in Frage stehenden Art sind bekannt und dienen zum bedarfsweisen Ausbringen von Sand insbesondere bei Schienenfahrzeugen und Bussen zur Erhöhung der Haftung der Räder auf glattem Untergrund zwecks Verbesserung der Bremswirkung.

Dabei sei an dieser Stelle betont, daß die entsprechenden Vorrichtungen aufgrund der Tatsache, daß im Regelfall Sand gestreut wird, gemeinhin als Sandstreuvorrichtungen bezeichnet werden, daß aber mit den Vorrichtungen natürlich auch beliebige andere zur Erzielung der gewünschten Wirkung geeignete Streugüter gestreut werden können. Wenn also in dieser Anmeldung dem üblichen Sprachgebrauch gefolgt und stets nur von Sand bzw. von Sandstreuvorrichtung gesprochen wird, so ist hierin keine Beschränkung auf Sand als Streugut zu sehen.

Die bekannten Sandstreuvorrichtungen umfassen stets einen Sandbehälter und lassen sich in sog. offene und geschlossene Systeme unterscheiden, je nachdem, ob der Sandbehälter im Betrieb unter Druck gesetzt wird oder nicht. Bei offenen Systemen gelangt der Sand i.d.R. unter Schwerkrafteinfluß aus dem Sandbehälter in einen Sandauslauf mit einer Sandleitung, in welcher er mittels Druckluft zu einer Sandstreustelle befördert wird. Solche offenen Systeme sind z.B. aus den Druckschriften DE 42 38 049 A1, DE 44 29 370 A1, DE 100 44 608 A1 und DE 202 00 997 U1 bekannt.

Allerdings ist das Befüllen von Sandbehältern der bekannten Art erstaunlich aufwendig. Für die Befüllung werden in der Regel Klappenöffnungen an der Fahrzeugaußenhaut angebracht, über welche die Sandbehälter befüllt werden können. Damit solche die Sandbehälter befüllt werden können, sind komplizierte und teure Befülleinrichtungen notwendig, die nur an wenigen Wartungsstationen vorhanden sind, so daß ein Fahrzeug diese extra anfahren muß und damit für den normalen Linienbetrieb z.B. im ÖPNV nicht zur Verfügung steht. Bei manchen Sandstreuvorrichtungen bestehen sog. Notfall-Befüllöffnungen im Innenraum des Fahrzeugs, um bei dringendem Nachfüllbedarf die jeweiligen Sandbehälter auch außerhalb einer Wartungsstation befüllen zu können, jedoch sind diese Befüllöffnungen regelmäßig schwer zu erreichen und/oder aufwendig zu öffnen, z.B. weil Sitze abmontiert werden müssen, um zu ihnen zu gelangen. Bei der DE 202 00 997 U1 wird zum Befüllen sogar die komplette Sandstreuvorrichtung einschließlich Sandauslauf und Ventilmitteln vom Fahrzeug abgenommen.

Bei der Befüllung von Sandbehältern der bekannten Art kommt es zudem oft zu einer erheblichen Staub- und Schmutzbelastung. Findet die Befüllung im Fahrzeuginneren statt, ist anschließend regelmäßig eine Reinigung des Fahrzeuginneren notwendig.

### OFFENBARUNG DER ERFINDUNG

Der Erfindung liegt die Aufgabe zugrunde, das Nachfüllen von Sand insbesondere bei offenen Systemen einfacher, sauberer und kostengünstiger zu gestalten.

Die Aufgabe wird gelöst von einer Sandstreuvorrichtung mit den Merkmalen des Anspruchs 1. Der nebengeordnete Anspruch 10 betrifft einen Sandbehälter für eine Sandstreuvorrichtung, der nebengeordnete Anspruch 11 eine Behälteraufnahme für eine Sandstreuvorrichtung. Vorteilhafte Ausgestaltungen und Weiterbildungen sind Gegenstand der Unteransprüche.

Die Erfindung hat den Vorteil, daß spezielle Befülleinrichtungen für Fahrzeuge nicht mehr notwendig sind. Die Fahrzeuge müssen nicht mehr zu einem Ort, der mit einer Befülleinrichtung ausgestattet ist, gefahren werden. Außerdem wird die Staub- und Schmutzbelastung bei der Befüllung, insbesondere wenn diese vom Fahrzeuginneren stattfindet, erheblich gesenkt.

Zudem erlaubt es die Erfindung, durch leichte Modifikationen und Nachrüsten entsprechender Behälteraufnahmen auch bestehende Sandstreuvorrichtungen mittels Wechselbehältern nachfüllbar zumachen, so daß damit ausgerüstete Fahrzeuge nicht mehr aufwendig zwecks Sandnachfüllung in Wartungshallen gefahren werden müssen.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung. Es zeigen:
- Fig. 1: eine stark schematisierte Seitenansicht einer erfindungsgemäßen Sandstreuvorrichtung zu einem Zeitpunkt, in dem sich der Sandbehälter kurz vor der Behälteraufnahme befindet,
- Fig. 2: die Sandstreuvorrichtung gemäß Fig. 1, wobei der Sandbehälter in die Behälteraufnahme eingesetzt ist, und

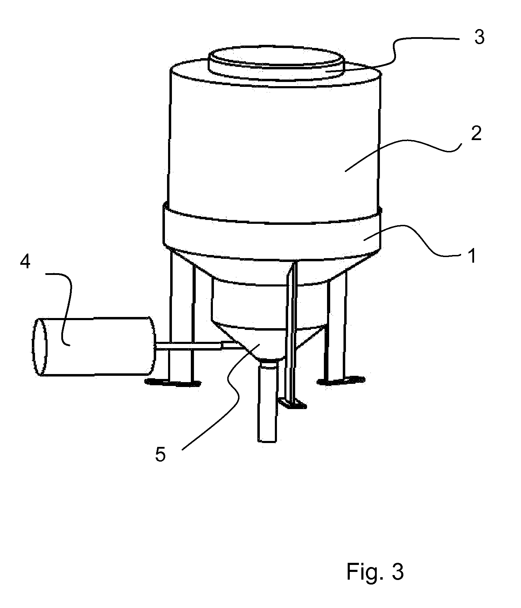

- Fig. 3: eine stark schematisierte perspektivische Darstellung der Sandstreuvorrichtung gemäß Fig. 2, jedoch schräg von hinten gesehen.

### BESCHREIBUNG BEVORZUGTER AUSFÜHRUNGSFORMEN

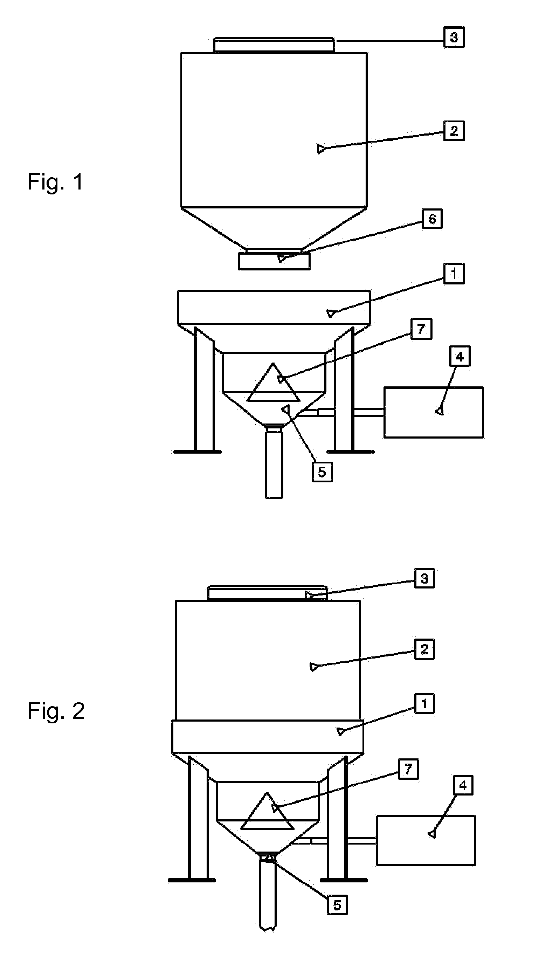

Die Fig. 1 zeigt stark schematisiert den prinzipiellen Aufbau einer erfindungsgemäßen Sandstreuvorrichtung mit einer Behälteraufnahme 1, einem Sandbehälter 2, einer Druckluftquelle 4 und einem Sandauslauf 5 mit einer Sandleitung zum Transportieren von Sand aus dem Sandbehälter zu einer Sandstreustelle.

Der Sandbehälter ist als Wechselbehälter ausgebildet und wird zur Benutzung in die Behälteraufnahme 1, die zum austauschbaren Haltern des Sandbehälters ausgebildet ist, eingesetzt. Die Behälteraufnahme umfaßt bei dieser Ausführungsform unter anderem den Sandauslauf 5 und hier nicht weiter gezeigt Ventilmittel, die automatisch oder von einem Fahrer eines mit der Sandstreuvorrichtung ausgestatteten Fahrzeugs manuell zum Öffnen und Schließen der Sandleitung betätigt werden können. Zum Nachfüllen des Sandbehälters kann dieser in einfacher Weise aus der Behälteraufnahme genommen und vom Sandauslauf getrennt werden.

Um den Sandbehälter 2 in der Behälteraufnahme 1 lösbar zu befestigen, kann z.B. eine Innengewinde-Außengewinde-Verbindung vorgesehen sein, wobei der Sandbehälter mit einem Außengewinde und die Behälteraufnahme mit einem Innengewinde ausgestattet sind. Die Verbindung kann auch, insbesondere wenn sich das Aufschrauben des Sandbehälters 2 schwierig gestaltet, als Bajonettverbindung ausgeführt werden. Auch Verbindungsmittel wie z.B. Schnappverschlüsse, Spannriemen und dergleichen können zum Fixieren des Sandbehälters in der Behälteraufnahme vorgesehen werden.

Damit der Sand aus dem Sandbehälter 2 austreten kann, weist dieser eine Sandaustrittsöffnung auf, die mit einem ersten Verschluß 6 verschließbar ist. Die Sandstreuvorrichtung ist bei dem gezeigten Ausführungsbeispiel mit Mitteln 7 zum automatischen Öffnen des ersten Verschlusses 6 ausgestattet, so daß beim Einsetzen des Sandbehälters 2 in die Behälteraufnahme 1 der erste Verschluß 6 geöffnet wird und Sand austreten kann.

Der erste Verschluß 6 des Sandbehälters 2 kann als einfache durchstechbare Membran ausgebildet sein, die beim Einsetzen des Sandbehälters in die Behälteraufnahme von den Mitteln 7 zum automatischen Öffnen durchstochen wird. Solche Verschlüsse sind insbesondere dann vorteilhaft, wenn der Sandbehälter als Einwegbehälter ausgebildet ist.

Der erste Verschluß 6 des Sandbehälters 2 kann auch nach Art der Irisblende eines Fotoapparates oder in Form eines Schieberiegels ausgebildet sein und beim Entnehmen des Sandbehälters aus der Behälteraufnahme automatisch schließen (z.B. durch Vorsehen einer entsprechend vorgespannten Feder) bzw. geschlossen werden. Dementsprechend können die Mittel 7 zum automatischen Öffnen des ersten Verschlusses 6 beispielsweise als Hebel oder Haken ausgebildet werden, so daß der erste Verschluß bei Einsetzen des Sandbehälters in eine geöffnete Position gezogen und beim Entnehmen in eine geschlossene Position geschoben wird. Eine solche Ausgestaltung hat insbesondere bei Mehrweg-Sandbehältern Vorteile und erlaubt es auch, z.B. vor Antritt einer längeren Fahrt vorsorglich den Sandbehälter zu wechseln, ohne daß dabei noch im Sandbehälter befindliche Reste aus dem Sandbehälter austreten und zu Verschmutzungen führen. Auch wird es damit möglich, im Bedarfsfalls Sandbehälter eines Fahrzeugs untereinander zu tauschen, wenn nämlich z.B. der Sandvorrat eines Antriebsrades aufgebraucht ist, andere Sandstreuvorrichtungen an anderen Rädern jedoch noch über genügend Sand verfügen.

Bei dem gezeigten Ausführungsbeispiel besitzt der Sandbehälter 2 eine Sandeinfüllöffnung, welche mittels eines zweiten Verschlusses 3 verschließbar ist. Eine solche Sandeinfüllöffnung erlaubt es nicht nur, den Sandbehälter mehrfach zu verwenden, sie ermöglicht es auch, den Sandbehälter in Ausnahmefällen, wenn z.B. aufgrund von extremen Witterungsbedingungen der Sand im Behälter unerwartet zu Neige geht, jedoch weiterer Sand zum Fortsetzen der Fahrt benötigt wird, manuell nachzufüllen.

Der Sandbehälter kann als Einwegbehälter ausgebildet sein. Als Materialien für einen Einwegbehälter eignen sich insbesondere Kunststoffe. Einwegbehälter besitzen vorteilhaft ein geringes Eigengewicht aufweist. Sie können kostengünstig einstückig ausgebildet sein, wobei dann die Sandaustrittsöffnung des Sandbehälters einfach als durchstechbare Kunststofffläche ausgebildet wird.

Der Sandbehälter kann auch als Mehrwegbehälter ausgestaltet sein. Mehrwegbehälter werden vorzugsweise aus Metall oder stabilem Kunststoff gefertigt.

Der Sandbehälter weist üblicherweise ein Fassungsvermögen von 5 bis 15 kg, vorzugsweise etwa 10 kg Streugut auf. In der Praxis hat sich gezeigt, daß eine Menge zwischen 5 und 15 kg Streugut auch bei erhöhtem Sandverbrauch einen guten Kompromiß zwischen möglichst geringem Einbauplatzbedarf und zwecks möglichst selten notwendigen Nachfüllens möglichst großem Sandvorrat darstellt. Auch kann ein Sandbehälter mit einem solchen Fassungsvermögen leicht von einer einzigen Person getauscht werden.

Um das Gewicht der einzelnen Sandbehälter möglichst gering zu halten und gleichwohl ein großes Sandvolumen zur Verfügung zu stellen, sind bei bevorzugten Ausführungsformen der Erfindung mehrere Behälteraufnahmen für jeweils einen Sandbehälter bzw. eine zur Aufnahme mehrerer Sandbehälter ausgebildete Behälteraufnahme vorgesehen. Auch können die Sandbehälter je nach den bei einem auszurüstenden Fahrzeug vorhandenen Gegebenheiten so ausgebildet sein, daß sie miteinander gekoppelt, z.B. derart übereinander gestapelt werden, daß die Sandaustrittsöffnung eines Sandbehälters in der Sandeinfüllöffnung eines darunter angeordneten Sandbehälters steckt.

Sind mehrere Behälteraufnahmen für jeweils einen Sandbehälter bzw. eine zur Aufnahme mehrerer Sandbehälter ausgebildete Behälteraufnahme vorgesehen, wobei die Sandbehälter eine gemeinsame Sandleitung speisen, kann vorgesehen sein, daß die Sandaustrittsöffnungen aller Behälter gleichzeitig geöffnet sind, so daß sich die Behälter bei Benutzung der Sandstreuvorrichtung mehr oder weniger gleichmäßig entleeren, oder es können geeignete Steuermittel vorgesehen werden, um die Behälter nacheinander zu entleeren.

Die Erfindung hat den großen Vorteil, daß auch existierende Sandstreuvorrichtungen relativ leicht nachgerüstet werden können. Z.B. können bei existierenden Vorrichtungen die Behälter abgetrennt und eine erfindungsgemäße Behälteraufnahme 1 hinzugefügt werden, damit diese mit erfindungsgemäßen Sandbehältern betrieben werden können.

Im Rahmen des Erfindungsgedankens sind zahlreiche Abwandlungen und Weiterbildungen möglich. Z.B. kann insbesondere ein metallischer Sandbehälter leicht so ausgestaltet werden, daß er im Betrieb unter Druck gesetzt werden kann, wozu z.B. ein Anschluß an eine Druckluftquelle vorgesehen sein kann, so daß sich auch geschlossene Systeme mit austauschbaren Sandbehältern betreiben und existierende geschlossene Systeme auf den Betrieb mit austauschbaren Sandbehältern umrüsten lassen.

## Patentansprüche

1. Sandstreuvorrichtung für Fahrzeuge, umfassend:
- wenigstens einen Sandbehälter (2) und
- einen Sandauslauf (5) mit einer Sandleitung zum Transportieren von Sand aus dem wenigstens einen Sandbehälter zu einer Sandstreustelle,
**dadurch gekennzeichnet,**
- **daß** der Sandbehälter als Wechselbehälter (2) ausgebildet ist und
- **daß** eine Behälteraufnahme (1) zum austauschbaren Haltern des Sandbehälters vorgesehen ist.

2. Sandstreuvorrichtung nach Anspruch 1,
**dadurch gekennzeichnet,**
**daß** der Sandbehälter (2) eine mit einem ersten Verschluß (6) verschließbare Sandaustrittsöffnung aufweist und daß die Sandstreuvorrichtung mit Mitteln (7) zum automatischen Öffnen des ersten Verschlusses (6) beim Einsetzen des Sandbehälters in die Behälteraufnahme ausgestattet ist.

3. Sandstreuvorrichtung nach Anspruch 1 oder 2,
**dadurch gekennzeichnet,**
**daß** der erste Verschluß eine Membran oder eine Blende ist.

4. Sandstreuvorrichtung nach einem der Ansprüche 1 bis 3,
**dadurch gekennzeichnet,**
**daß** Mittel zum lösbaren Befestigen des Sandbehälters in der Behälteraufnahme vorgesehen sind, insbesondere in Form einem Innengewinde-Außengewinde-Verbindung oder einer Bajonett-Verbindung.

5. Sandstreuvorrichtung nach einem der Ansprüche 1 bis 4,
**dadurch gekennzeichnet,**
**daß** der Sandbehälter (2) eine mit einem zweiten Verschluß (3) verschließbare Sandeinfüllöffnung aufweist.

6. Sandstreuvorrichtung nach einem der Ansprüche 1 bis 5,
**dadurch gekennzeichnet,**
**daß** der Sandbehälter als Einwegbehälter insbesondere aus Kunststoff ausgebildet ist.

7. Sandstreuvorrichtung nach einem der Ansprüche 1 bis 5,
**dadurch gekennzeichnet,**
**daß** der Sandbehälter als Mehrwegbehälter insbesondere aus Metall ausgebildet ist.

8. Sandstreuvorrichtung nach einem der Ansprüche 1 bis 7,
**dadurch gekennzeichnet,**
**daß** der Sandbehälter zur Aufnahme von etwa 5 bis 15 kg, vorzugsweise etwa 10 kg Streugut ausgebildet ist.

9. Sandstreuvorrichtung für Fahrzeuge nach einem der Ansprüche 1 bis 8,
**dadurch gekennzeichnet,**
- **daß** mehrere Behälteraufnahmen für jeweils einen Sandbehälter oder eine zur Aufnahme mehrerer Sandbehälter ausgebildete Behälteraufnahme vorgesehen sind.

10. Sandbehälter für Sandstreuvorrichtungen für Fahrzeuge mit einer mit einem ersten Verschluß (6) verschließbaren Sandaustrittöffnung und vorzugsweise einer mit einem zweiten Verschluß (3) verschließbaren Sandeinfüllöffnung.

11. Behälteraufnahme (1) für eine Sandstreuvorrichtung zum austauschbaren Haltern wenigstens eines Sandbehälters nach Anspruch 10, vorzugsweise mit Mitteln (7) zum automatischen Öffnen eines ersten Verschlusses eines Sandbehälters beim Einsetzen des in die Behälteraufnahmen versehen.
